# EUROPÄISCHE PATENTANMELDUNG

(11) **EP 1 142 469 A2**
(43) Veröffentlichungstag der Anmeldung: **10.10.2001**
(21) Anmeldenummer: 01106338.5
(22) Anmeldetag: 16.03.2001
(51) Int. Cl.: A01F 15/07

(54) **Rundballenpresse**

(30) Priorität: 21.03.2000 US 532117
(71) Anmelder: DEERE & COMPANY, Moline, Illinois 61265-8098 (US)
(72) Erfinder: Anstey, Henry Dennis, Ottumwa, IA 52501 (US); Mass, Nissim, Haemek (IL); Lieber, Yuval, D.A. Megido (IL); Paz, Zvi, Haemek (IL)
(74) Vertreter: Magin, Ludwig Bernhard

(57) **Zusammenfassung**

Eine Rundballenpresse ist mit einem Netzbindemechanismus (70) ausgerüstet, um einen Ballen (56) mit Netzmaterial (78) zu binden, das breiter ist als die Breite der Ballenpresskammer, so dass sich das Netzmaterial (78) über die gegenüberliegenden Enden des Ballens (56) erstreckt. Die Ballenpresse weist eine Ballenpresskammer auf, die teilweise durch eine Mehrzahl von Ballenbildungsriemen (42) abgegrenzt ist, die in einem Seite-an-Seite-Verhältnis an einer Mehrzahl von Riemenstützwalzen (26,28,30,32,36,38,40) befestigt sind, die sich zwischen gegenüberliegenden Seitenwänden der Ballenpresskammer erstrecken. Das Netzmaterial (78) wird unterhalb der Entladeklappe (20) der Ballenpresse einem Ernteguteinlass (60) zugeführt, der zwischen einer unteren vorderen Riemenstützwalze (40) angeordnet ist, die von der Entladeklappe (20) getragen wird, wobei das Netz (78) durch sich in Längsrichtung erstreckende Stränge (105) von Riemen in die Ballenpresskammer befördert wird, die sich zwischen einer unteren hinteren (38) und der unteren vorderen (40) Riemenstützwalze erstrecken und das Netz entlang einer Führungsfläche (82) befördern, die durch eine Mehrzahl von Kanalelementen (104) abgegrenzt wird, die jeweils unterhalb der sich in Längsrichtung erstreckenden Stränge (105) der Riemen angeordnet sind. Um sicherzustellen, dass das Netzmaterial in einer Breite an der Ballenpresskammer ankommt, die breiter ist als die der Ballenpresskammer, sind Schnecken (110) an gegenüberliegenden Enden der unteren hinteren Riemenstützwalze (38) und Dehnringe (112) an den gegenüberliegenden Enden der unteren vorderen Riemenstützwalzen (40) befestigt, wobei die Schnecken (110) im Verhältnis zu den Dehnringen (112) auf der Außenseite angeordnet sind, wobei ein größerer Abschnitt der Dehnringe (112) außerhalb der gegenüberliegenden Seitenwände der Ballenpresskammer angeordnet ist. Um zu verhindern, dass minderwertige oder verstreute Ernteguthalme das Netzmaterial beeinträchtigen und es daran hindern, auf seine volle Länge gedehnt und zugeführt zu werden, ist eine Schutzvorrichtung (122) im Inneren der Ballenpresskammer an einer Stelle oberhalb der unteren hinteren Walze (38) vorgesehen. Umhüllungsschilde (150) sind vorgesehen, um die Dehnringe (112) vor Erntegut abzuschirmen, das in die Ballenpresskammer befördert wird, und es sind verschiedene andere Konstruktionen vorgesehen, um die Ansammlung von minderwertigem oder verstreutem Erntegut in der Nähe der Dehnringe (112) und anderen Bereichen in der Netzbeförderungsstrecke zu verhindern.

## Beschreibung

Die vorliegende Erfindung betrifft eine Rundballenpresse mit einer Ballenbildungskammer, die umfangsseitig von mehreren Walzen und seitlich von Seitenwänden umgeben ist, und mit einer Umhüllungsvorrichtung, die über wenigstens zwei der Walzen Umhüllungsmaterial zu einem Einlass der Ballenbildungskammer führt, wobei das Umhüllungsmaterial 78 und die es führenden Walzen breiter sind als die Ballenbildungskammer und die Walzen an ihren axialen Endbereichen mit Dehnelementen versehen sind.

U.S.-Patent Nr. 6,006,504, ausgegeben am 28. Dezember 1999, betrifft eine Bindevorrichtung der oben genannten Art, aus dem es ersichtlich ist, dass es wichtig ist, das Netzmaterial an dem Punkt seiner Zufuhr in den Ernteguteinlass der Ballenpresskammer auf seine volle Breite zu dehnen.

Das der Erfindung zugrundeliegende Problem wird darin gesehen, daß der Betrieb einer Ballenpresse, die gemäß der patentierten Konstruktion konstruiert ist, Mängel in ihrer Konstruktion aufgedeckt hat, die zulassen, dass Erntegut die Dehn- und Zufuhrvorgänge des Netzes direkt beeinträchtigt oder sich ansammelt und diese daraufhin beeinträchtigt. Es hat sich sogar gezeigt, dass das störende Erntegut in einigen Fällen Schnitte oder Risse im Netzmaterial verursachen kann. Diese Beeinträchtigung kann an jedem Punkt entlang des gesamten Zufuhrweges des Netzmaterials auftreten, der sich unterhalb der Entladeklappe der Ballenpresse und in den Ernteguteinlass erstreckt, jedoch besonders in der Nähe der unteren hinteren und unteren vorderen Riemenstützwalzen der Entladeklappe.

Gemäß der vorliegenden Erfindung wird eine Netzmaterialzufuhrkonstruktion geschaffen, die eine Verbesserung gegenüber der Konstruktion darstellt, die in dem oben gekennzeichneten Patent offenbart ist.

Mit der vorliegenden Erfindung ist eine Bindenetzzufuhrbaugruppe geschaffen, die in der Lage ist, unter einer Vielzahl von Erntegutbedingungen Netzmaterial in einer Breite, die größer ist als die der Kammer der Ballenpresse, effektiv dem Ernteguteinlass einer Rundballenpresse zuzuführen, so dass ein darin befindlicher Ballen gebunden wird, während sich das Netz über gegenüberliegende Endsegmente des Ballens erstreckt.

Mit den Merkmalen von Unteransprüchen ist es gelungen, eine Bindenetzzufuhrbaugruppe mit verschiedenen Komponenten zu schaffen, die zusammenwirken, um den Strom von hereinkommendem Erntegut aufrecht zu halten sowie verstreutes oder minderwertiges Erntegut an einer Beeinträchtigung der Dehnung und Zufuhr des Netzmaterials zur Ballenpresskammer zu hindern.

Nach einer weiteren vorteilhaften Weiterentwicklung der Erfindung sind aggressive Netzdehnschnecken an den gegenüberliegenden Enden der unteren hinteren Entladeklappenwalze vorgesehen, die das Netzmaterial auf seine volle Breite dehnen und so das Bindematerial in einer geeigneteren Position anordnen, damit aggressive Bindematerialdehnringe an den Enden der unteren vorderen Riemenstützwalze der Entladeklappe ein Stück in das Netzmaterial eingreifen können.

Mittels aggressiver Dehnringe an den gegenüberliegenden Enden der unteren vorderen Entladeklappenwalze ist es nicht nur gelungen das Netz auf eine Breite dehnen, die größer ist als die Breite der Ballenpresskammer, sondern ebenfalls Erntegut in der Umgebung des Rings ausräumen, um eine Ansammlung des Ernteguts mit ihrer begleitenden Unterbrechung der Zufuhr des Netzes in die Ballenpresskammer zu verhindern.

Gemäß einer anderen Weiterbildung der Erfindung sind Umhüllungsschilde vorgesehen, die die Dehnringe an den gegenüberliegenden Enden der unteren vorderen Entladeklappenwalze vor dem hereinkommenden Erntegutstrom sowie vor minderwertigem oder verstreutem Erntegut schützen, das sich auf Rahmenelementen der Ballenpresse ansammeln kann, während gleichzeitig ein offener hinterer Bereich für Erntegut geschaffen wird, das durch den Betrieb eines Ausräumers ausgestoßen wird, der von dem Dehnring getragen wird, und zusätzlich, um einen offenen Weg abzugrenzen, damit Netzbindematerial in den geschützten Bereich der Dehnringe eindringen und um diesen herumgeführt werden kann.

Mittels eines Walzenschabers an der Rückseite der unteren vorderen Klappenwalze ist es möglich, verstreute oder minderwertige Erntegutstücke von den Dehnringen an den gegenüberliegenden Enden der Klappenwalze zu beseitigen.

Wieder eine andere Weiterentwicklung der Erfindung sieht spiralförmige Streifen an der unteren vorderen Klappenwalze vor, die die Aggressivität zwischen der Walze und den Riemen erhöhen, so dass Erntegut durch den Spaltbereich geführt wird, Erntegut häckseln, wenn es mit dem Walzenschaber in Eingriff kommt, minderwertige oder verstreute Stücke von Erntegut durch die spiralförmige Bewegung einwärts von den Dehnringen an den gegenüberliegenden Enden der Walze wegbefördern und die Ballenbildungsriemen anheben und schütteln, so dass verstreute oder minderwertige Erntegutstücke, die von den Riemen befördert werden, zwischen die Riemen fallen.

Schließlich sind Riemenführungselemente an der Netzmaterialführungsplattenkonstruktion in der Nähe des Spalts zwischen den Riemen und der unteren vorderen Entladeklappewalze vorgesehen, so dass das Netzbindematerial über die Oberseiten der Führungsscheiben laufen kann, ohne daran gehindert zu werden, durch die Dehnringe gedehnt zu werden, die an den gegenüberliegenden Enden der unteren vorderen Walze bereitgestellt sind.

In der Zeichnung ist ein nachfolgend näher beschriebenes Ausführungsbeispiel der Erfindung dargestellt. Es zeigt:
- FIG. 1: einen rechtsseitigen Aufriss einer Rundballenpresse, die mit einer Net zbindungsbaugruppe der Art ausgestattet ist, mit der die vorliegende Erfindung in besonders geeigneter Weise verwendbar ist,
- FIG. 2: einen rechtsseitigen Aufriss, der eine Vergrößerung des Abschnitts aus FIG. 1 zeigt, der den unteren Abschnitt der Entladeklappe und die Netzbindematerialzufuhrkonstruktion umfasst, die sich unterhalb der Klappe erstreckt, wobei jedoch einige Bauteile der Klarheit halber ausgelassen sind,
- FIG. 3: eine etwas schematische Unteransicht, die das Verhältnis zwischen der rechten Schnecke und dem rechten Dehnring zeigt,
- FIG. 4: eine perspektivische Ansicht der rechten Schnecke,
- FIG. 5: eine linke Endansicht der Schnecke, die in FIG. 4 gezeigt ist,
- FIG. 6: einen vorderen Aufriss eines Schilds, der verhindert, dass minderwertiges oder verstreutes Erntegut seitlich in die Nähe der Schnecke gelangt;
- FIG. 7: eine etwas schematische, rechte perspektivische Rückansicht eines rechten, unteren, vorderen Abschnitts des Entladeklappe, wobei Teile weggeschnitten sind, um zu zeigen, wie das Netzbindematerial gestützt und in die Ballenpresskammer geführt wird,
- FIG. 8: einen rechtsseitigen Aufriss des unteren vorderen Abschnitts einer Ballenentladeklappe, wobei Teile weggeschnitten sind, der den rechten Net zbindematerialdehnring und den zugehörigen Schild zum Schutz gegen die Aufnahme von Erntegut durch den Dehnring sowie die Walzenschaber und die Riemenführungen zeigt,
- FIG. 9: einen vorderen Aufriss der Konstruktion aus FIG. 8, wobei Teile weggebrochen sind,
- FIG. 10: eine vertikale Schnittansicht entlang der Linie 10--10 aus FIG. 8, die die Ballenbildungsriemen, die Stütze für die Riemen und die Riemenführungen zeigt,
- FIG. 11: einen vorderen Aufriss des rechten Dehnrings und
- FIG. 12: einen rechten Seitenriss des rechten Dehnrings.

Zunächst ist anzumerken, dass verschiedene Bauteile paarweise vorhanden und beschrieben sind, während nur ein Teil jedes Paars gezeigt ist, und es versteht sich, dass das nicht vorhandene Bauteil dasselbe oder von gleicher oder spiegelbildlicher Konstruktion wie das gezeigte ist.

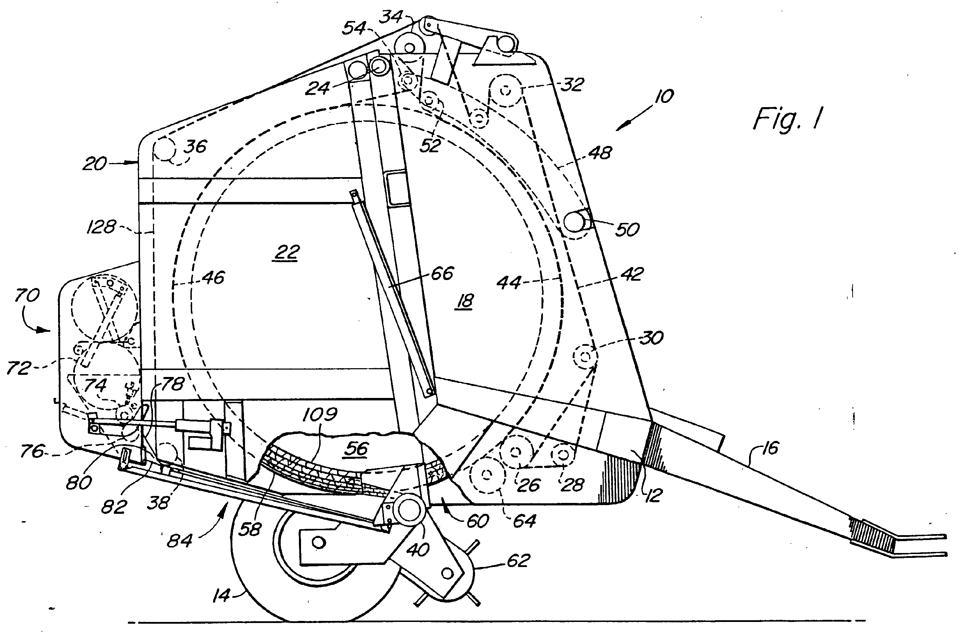

Unter Bezugnahme auf FIG. 1 ist eine Ballenpresse 10 der Art gezeigt, die zur Herstellung von großen zylindrischen Ballen verwendet wird und gewöhnlich Rundballenpresse genannt wird. Die Ballenpresse 10 umfasst einen Hauptrahmen 12, der von einem Paar Bodenräder 14 getragen wird, von denen nur das linke Bodenrad gezeigt ist. Eine Zugdeichsel 16, die zur Verbindung mit einem Traktor geeignet ist, ist am Hauptrahmen 12 befestigt. Ein Paar quer beabstandete, vertikale Seitenwände 18 ist mit dem Rahmen 12 verbunden, und jede von ihnen weist ein aufrecht stehendes hinteres Ende auf. Eine Ballenentladeklappe 20, die gegenüberliegende Seitenwände 22 umfasst, ist vertikal schwenkbar an oberen hinteren Stellen der Seitenwände 18 angebracht, wie bei 24, wobei die Seitenwände 22 vordere Enden aufweisen, die an hinteren Enden der Seitenwände 18 anliegen, wenn sich die Klappe 20, wie gezeigt, in einer abgesenkten, geschlossenen Position befindet.

Die Paare von Seitenwänden 18 und 22 stützen drehbar die gegenüberliegenden Enden einer Mehrzahl von Ballenbildungsriemenstützwalzen, die benachbart zur Peripherie der Seitenwände angeordnet sind. Insbesondere sind, beginnend an einer unteren zentralen Stelle der Seitenwände 18 und gegen den Uhrzeigersinn fortschreitend, eine angetriebene Walze 26, eine untere vordere Walze 28, eine mittlere vordere Walze 30, eine obere vordere Walze 32 und eine obere hintere Walze 34 befestigt; und von einer oberen hinteren Stelle der Klappenseitenwände 22 aus weiter gegen den Uhrzeigersinn fortschreitend, sind eine obere hintere Walze 36, eine untere hintere Walze 38 und eine untere vordere Walze 40 befestigt. Zwischen den Paaren von Seitenwänden 18 und 22 ist eine Mehrzahl von Endlos-Ballenbildungsriemen 42 angebracht, die seitlich nebeneinander über die verschiedenen Riemenstützwalzen hinweg gestützt werden. Bis auf einige der Riemen 42, die die untere vordere Walze 28 überspringen, sind die Riemen so angeordnet, dass sie der Reihe nach an den Walzen 26, 28, 30, 32, 36, 38, 40 und 34 angreifen. Ein vorderes Trum oder ein vorderer Strang 44 der Riemen 42 erstreckt sich aufwärts von der angetriebenen Walze 26 zu der Walze 34. Ebenso erstreckt sich ein hinterer Strang 46 der Riemen 42 aufwärts von der unteren vorderen Klappenwalze 40 zu der Walze 34. Zwischen hinteren Endpositionen eines Paars sich nach hinten erstreckender Spannarme 48, die wie bei 50 vertikal schwenkbar an einer Stelle in mittlerer Höhe an der Vorderseite der Seitenwände 18 befestigt sind, sind dicht beabstandet vordere und hintere Riemenspannwalzen 52 und 54 befestigt, wobei die Riemenstränge 44 und 46 mit den Seitenwänden 18 und 22 zusammenwirken, um eine vergrößerbare Ballenpresskammer oder Ballenbildungskammer 56 abzugrenzen, die oben durch die Riemenspannwalzen 52 und 54 geschlossen ist und hier in einem beträchtlich vergrößerten Zustand mit einem darin befindlichen Ballen 58 gezeigt ist. Wenn die Kammer 56 leer ist, laufen die vorderen und hinteren Stränge 44 und 46 der Riemen 42 von der Antriebswalze 26 und der unteren vorderen Klappenwalze 40 aufwärts zusammen und laufen dicht beieinander zwischen den Walzen 52 und 54 hindurch, wobei der Strang 44 eine hintere Fläche der vorderen Walze 52 berührt und der Strang 46 eine vordere Fläche der hinteren Walze 54 berührt, wodurch die Kammer 56, von der Seite gesehen, keilförmig ist. Der Boden der Kammer 56 ist mit einem Ernteguteinlass 60 versehen, der sich zwischen der angetriebenen Walze 26 und der unteren vorderen Klappenwalze 40 erstreckt. Erntegutprodukte werden durch eine Pickup 62 in den Einlass 60 eingeführt, um zu einem Ballen, wie beispielsweise dem Ballen 58, aufgerollt zu werden, und zwar durch die Wirkung der vorderen und hinteren Stränge 44 und 46 der Riemen 42, die so angetrieben werden, dass sie in Richtung auf den Einlass zu bzw. von dem Einlass weg laufen, und anfänglich ebenfalls durch eine Starterwalze 64, die drehbar in den Seitenwänden 18 und benachbart zu der angetriebenen Walze 26 befestigt ist und in derselben Richtung angetrieben wie diese, so dass sie Erntegut abstreift, das durch den vorderen Strang der Riemen 44 abwärts befördert wird. Während der Ballen 58 gebildet wird, dehnt sich die Kammer 56, wie gezeigt, nachgiebig auf eine vorherbestimmte Größe aus, und zwar gegen die Kraft, die durch ein Spannsystem in den Riemen aufgebracht wird, das das Paar Spannarme 48 zusammen mit einem Paar Spannfedern (nicht gezeigt) und einem Paar von hydraulischen Zylindern (nicht gezeigt) umfasst, welche zwischen den Wänden 18 und den Armen 48 befestigt sind, um einer Aufwärtsbewegung der Arme entgegenzuwirken, wobei diese Art in der Technik bekannt ist. Ein Paar Klappenzylinder 66 ist für die Aufwärtsdrehung der Klappe 20 um die schwenkbare Befestigung 24 in eine geöffnete Position bereitgestellt, wenn gewünscht wird, den Ballen 58 auf den Boden abzuladen.

Am unteren hinteren Abschnitt der Entladeklappe 20 ist ein Bindenetzspendemechanismus 70 befestigt, in dem eine Netzmaterialversorgungsrolle 72 angeordnet ist, die direkt auf einer angetriebenen oberen Netzmaterialzufuhrwalze 74 angeordnet ist, die oberhalb und hinter der Rotationsachse einer unteren Zufuhrwalze 76 angeordnet ist. Ein Umhüllungs- oder Bindematerial 78 erstreckt sich von der vorderen Fläche der Netzmaterialversorgungsrolle 72 zwischen der Versorgungsrolle 72 und der Netzmaterialzufuhrwalze 74 und dann vorwärts durch einen Spalt oder Walzenangriff, der durch die obere und die untere Zufuhrwalze 74 bzw. 76 abgegrenzt wird. Wenn ein Ballen gebunden bzw. gewickelt wird, wie in FIG. 1 gezeigt, erstreckt sich das Bindematerial 78 durch einen Spalt 80, der durch eine Wanne oder Platte 82 und die Riemen 42 abgegrenzt wird, wo letztere um die untere hintere Riemenstützwalze 38 herum laufen, in den Einlass 60 der Ballenpresskammer 56.

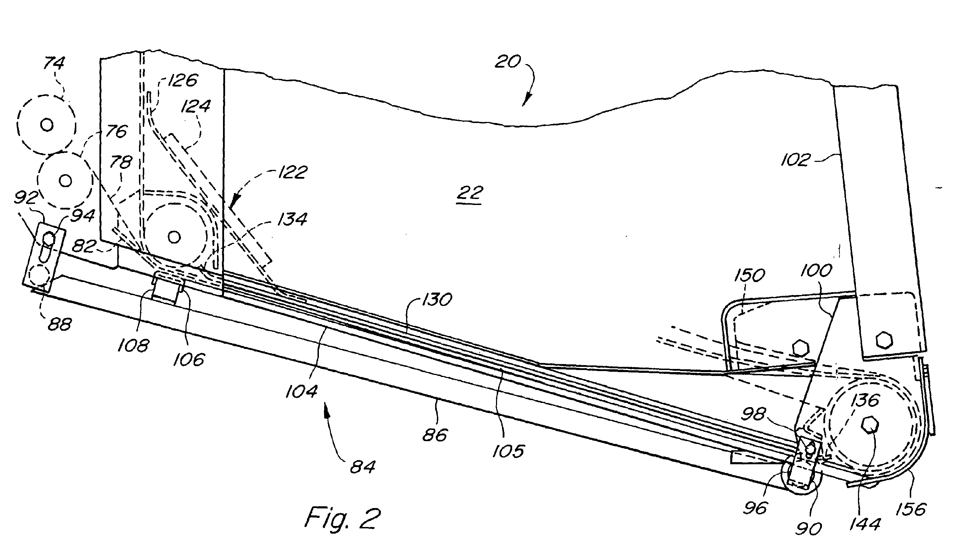

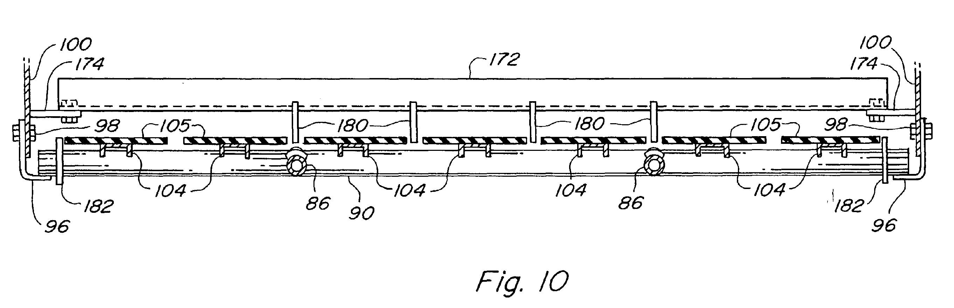

Unter Bezugnahme auf FIG. 2 ist ersichtlich, dass die Platte 82 einen Teil einer Netzmaterialführungsbaugruppe 84 bildet, die unterhalb der Entladeklappe 20 angeordnet ist und des weiteren einen Stützrahmen umfasst, der ein Paar sich in Längsrichtung erstreckende Elemente 86 (Fig. 10) umfasst, deren hintere Enden benachbart zu gegenüberliegenden Enden eines zylindrischen hinteren Kreuzelements 88 befestigt sind und vorwärts an quer beabstandeten Stellen zusammenlaufen, wo sie mit einem mittleren Abschnitt einer zylindrischen vorderen Traverse 90 verbunden sind. Ein Paar Laschen oder Bänder 92 ist jeweils an gegenüberliegenden Enden des hinteren Kreuzelements 88 befestigt und ist beispielsweise durch Schrauben 94 an den gegenüberliegenden Seiten des Gehäuses des Spendemechanismus 70 befestigt. Ebenso ist ein Paar Laschen oder Bänder 96 an gegenüberliegenden Enden der vorderen Traverse 90 befestigt und ist beispielsweise durch Schrauben 98 an jeweiligen Platten 100 befestigt, die an äußere untere Abschnitte von Streben 102 geschweißt sind, die vordere Versteifungselemente der gegenüberliegenden Seitenwände 22 bilden. Eine Mehrzahl von sich längs erstreckenden, quer beabstandeten, nach unten geöffneten Kanalelementen 104 ist unter jedem der Stränge 105 der Riemen 42 angeordnet (siehe FIG. 10), die sich in Längsrichtung zwischen den Walzen 38 und 40 erstrecken, wobei ein vorderer Abschnitt jedes der Elemente 104 mit der vorderen Traverse 90 verbunden ist und sich nach vorne über die Traverse 90 hinaus zu jeweiligen Stellen unterhalb der unteren vorderen Klappenwalze 40 erstreckt, und wobei ein hinteres Ende jedes der Elemente 104 mit einer vorderen Seite eines transversalen, abwärts geöffneten Kanalelements 106 verbunden ist, das direkt unterhalb der unteren hinteren Klappenwalze 38 angeordnet ist. Eine aufwärts gebogene Blattfeder 108 überbrückt das Paar von sich in Längsrichtung erstreckenden Elementen 86, und ihre gegenüberliegenden Enden sind mit diesen in Eingriff, wobei ein mittlerer Abschnitt der Blattfeder 108 an einer mittleren Stelle des Kanalelements 106 in einer Weise befestigt ist, die nicht gezeigt ist. Es wird angemerkt, dass die Platte 82 an der Oberseite des Kanalelements 106 sowie an den hinteren Enden der Kanalelemente 104 befestigt ist und dass die Blattfeder 108 die Platte 82 in der Nähe der Riemenstützwalze 38 gegen die Riemen 42 drückt, so dass beim Start des Bindevorgangs leicht ein freies Ende des Netzes 78 erfasst wird.

Dementsprechend ist ersichtlich, dass das Netzmaterial 78, nachdem es durch den Spalt 80 gelaufen ist, auf den oberen flachen Flächen der Längskanäle 104 unterhalb der Längsstränge 105 der Riemen 42 gestützt wird. Tatsächlich befördern die Riemenstränge 105 das Netzmaterial 78 um die Walze 40 herum und in die Ballenpresskammer 56, wo es um den Ballen 58 herumgewickelt wird, der während des Bindevorgangs innerhalb der Kammer 56 durch die Bewegung der Riemenstränge 44 und 46 im Uhrzeigersinn gedreht wird.

Die Netzmaterialversorgungsrolle 72 ist länger als die Ballenpresskammer 56 breit ist, das heißt, die Länge der Rolle 72 ist größer als der Abstand zwischen den Seitenwänden 18 oder 22 der Ballenpresskammer 56. Es ist wünschenswert, dass das Netzmaterial 78 bei seinem Eintritt in die Ballenpresskammer 56 in seiner vollen Breite vorliegt, so dass äußere Randabschnitte des Netzes über die gegenüberliegenden Enden des Ballens 58 gefaltet werden, wie bei 109 in FIG. 1 gezeigt, und zu diesem Zweck werden die gegenüberliegenden Enden jeder der Riemenstützwalzen 38 und 40 jeweils durch Netzdehnvorrichtungen definiert, wobei nur die rechte Vorrichtung jeder Walze gezeigt ist. Die linken Dehnvorrichtungen sind Spiegelbilder der rechten Dehnvorrichtungen. Des weiteren ist anzumerken, dass die Seitenwände 22 der Entladeklappe jeweils eine untere, sich in Längsrichtung erstreckende Kante aufweisen, die sich oberhalb der oberen Flächen der Kanäle 104 befindet, so dass sie die Dehnung des Netzmaterials 78 auswärts über die Bodenkanten der Seitenwände 22 hinaus ermöglicht.

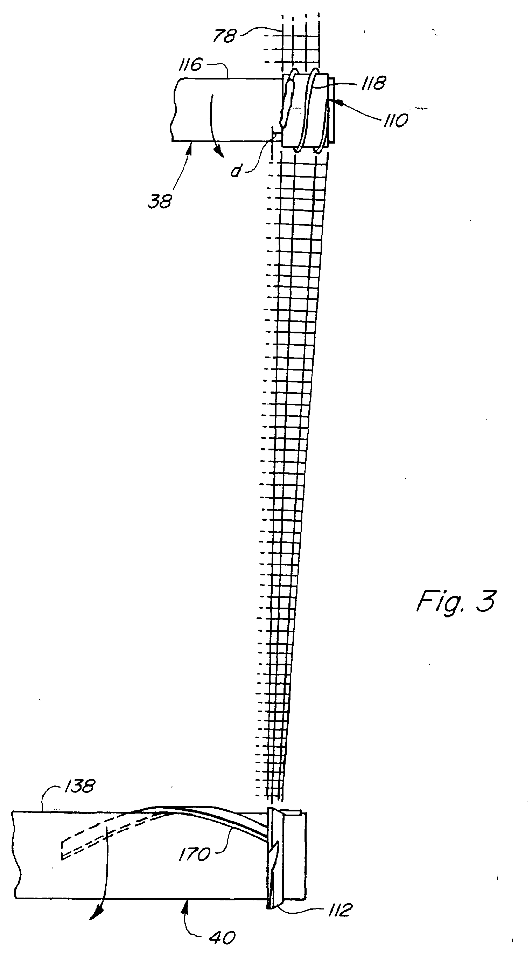

Unter Bezugnahme auf FIG. 3 bis 5 ist ersichtlich, dass die Dehnvorrichtungen, die gegenüberliegende Enden der unteren hinteren Klappenwalze 38 bilden, die Form einer Wendel oder Schnecke 110 aufweisen, und dass die Dehnvorrichtungen, die gegenüberliegende Enden der unteren vorderen Walze 40 begrenzen, die Form von Dehnringen 112 aufweisen. Die Wendel 110 umfasst eine zylindrische Hülse oder ein zylindrisches Rohr 113, das an gegenüberliegenden Enden eines mittleren zylindrischen Kernstücks 114 der Walze 38 aufgenommen wird und durch Einstellschrauben oder dergleichen (nicht gezeigt) in ihrer Position befestigt ist, wobei die Schrauben in Gewindebohrungen aufgenommen sind, die in dem Rohr 113 vorgesehen sind. Jedes Rohr 113 umfasst ein abgeschrägtes inneres Ende 115 mit einem Abschnitt, der auswärts in einem Winkel von etwa 10° zu einer vertikalen Ebene abgewinkelt ist, die die Rotationsachse des Dehnrings 110 im rechten Winkel schneidet, so dass eine Einlauffläche 116 gebildet wird. Die Einlauffläche 116 geht über in und bildet eine äußere Seite einer im allgemeinen V-förmigen Kerbe 117, die stufenweise flacher wird, so dass sich ihr äußeres Ende am Außendurchmesser des Rohrs 113 befindet. Das innere Ende des Rohrs 113 umfasst einen Abschnitt, der auseinandergeht und parallel zu einem Abschnitt des Einlaufabschnitts 116 verläuft, wo letzterer in eine Seite der Kerbe 117 übergeht, wobei der auseinandergehende Abschnitt des Rohrs ein vorderes Ende oder eine Nase 118 eines Spiralstegs 120 bildet, wobei die Nase eine Fläche aufweist, die in eine zweite Seite der Kerbe 117 übergeht. Der Spiralsteg 120 besteht aus einer Windung zum Eingriff mit Längssträngen des benachbarten Seitenabschnitts des Bindematerials 78 und zur Bewegung des Seitenabschnitts nach auswärts unterhalb der Seitenwände 22 der Entladeklappe.' Es wird angemerkt, dass die Nase 118 am Innendurchmesser des Rohrs 113 an einer Stelle beginnt, die sich innerhalb eines größeren Abschnitts des inneren Endes des Rohrs befindet, und in einem Winkelabstand von etwa 90° zur vollen Höhe des Stegs 120 ansteigt, die über die verbleibende Länge des Rohrs konstant bleibt. Dementsprechend beginnt die Nase oder das vordere Ende 118 des Stegs 120 am Außendurchmesser des zylindrischen Walzenkernstücks 114, so dass Längsstränge des Netzmaterials 78 wirksam von der Oberfläche des Walzenkernstücks 114 abgehoben werden und die auswärts gerichtete Bewegung des benachbarten Seitenabschnitts des Netzmaterials 78 eingeleitet wird. Wichtig ist, dass die Oberflächengeschwindigkeit der Wendel 110 größer ist als die lineare Geschwindigkeit des Netzmaterials 78, so dass der Spiralsteg 120 aggressiv in die Längsnetzstränge eingreift und diese auswärts bewegt. Während die spezielle Schnecke 110, die oben beschrieben wurde, beim Auswärtsdehnen des Netzmaterials hervorragende Arbeit leistet, können andere Formen verwendet werden, solange sie eine aggressive Aufnahme und Auswärtsführung des Netzmaterials bereitstellen.

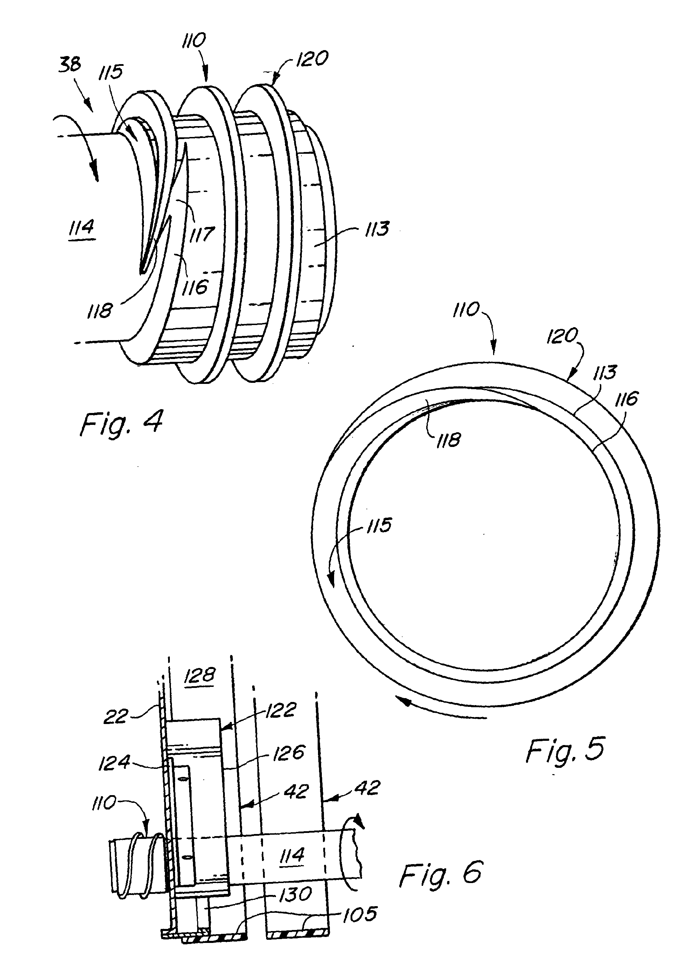

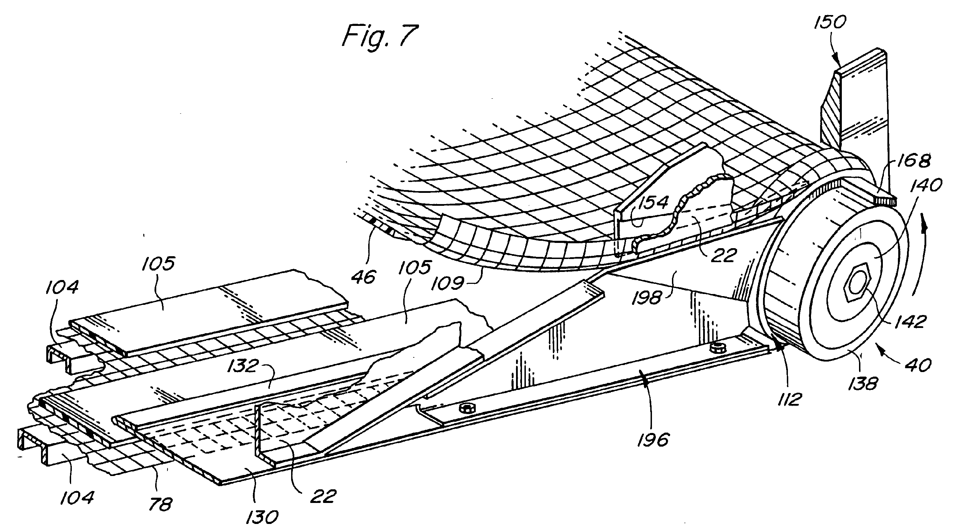

Die Wendel 110 bzw. diese Dehnvorrichtung an sich befindet sich außerhalb der gegenüberliegenden Seitenwände 22, und es bestehen entsprechende Spalte zwischen der Netzplatte 82 und den Seitenwänden 22, die zulassen, dass minderwertige oder verstreute Halme des Ernteguts, insbesondere lange Stängel von Erntegut wie beispielsweise Mais oder Rohr, die durch Spalte zwischen den Riemensträngen 46 in den Hohlraum zwischen den Riemensträngen 46 und den Strängen der Riemen 42, die sich um die Peripherie der Klappe 20 erstrecken, aus der Ballenpresskammer 56 gefallen sind, durch Spalte oder Öffnungen, die diesen Hohlraum mit dem Bereich benachbart zur Schnecke 110 und der Netzführungsplatte 82 verbinden, ihren Weg nach draußen finden und den Netzweg beeinträchtigen. Eine derartige Beeinträchtigung ist manchmal die Ursache dafür, dass das Netz reißt oder geschlitzt wird und/oder dass das Netz blockiert wird, so dass es nicht auf die volle Breite gedehnt wird, was dazu führt, dass sich das Netz nicht über die Enden des gebundenen Ballens erstreckt. Um zu verhindern, dass lange Halme dieses minderwertigen oder verstreuten Ernteguts seitwärts zwischen die äußersten Stränge der Riemen in der Nähe der Dehnschnecke 110 befördert werden, sind Schildkonstruktionen 122 (siehe FIG. 2 und 6) über den unteren hinteren Ecken der Entladeklappe 20 abgewinkelt angebracht, wobei nur die Konstruktion an der rechten Seite der Klappe 20 gezeigt ist. Insbesondere umfasst jede Schildkonstruktion 122 eine Stütze 124 in Form eines Winkeleisens, das in einem Winkel von etwa fünfundvierzig Grad zur Horizontalen an einer Stelle oberhalb der Walze 38 ausgerichtet ist, wobei einer seiner Schenkel an der Seitenwand 22 befestigt ist und sich ein zweiter Schenkel rechtwinklig dazu erstreckt. Ein flexibler Schild 126, der vorzugsweise aus einem flachen, rechtwinkligen Stück eines Riemenmaterials mit glatter Oberfläche konstruiert ist, ist an den zweiten Schenkel des Winkelelements 124 geschraubt oder in anderer Weise daran befestigt, so dass eine rechte Kante des Schildes 126 mit der Seitenwand 22 in Eingriff ist, ein hinterer Endabschnitt ist vom Winkelelement aufwärts gekrümmt und ist in Eingriff mit einem aufrecht angeordneten Strang 128 (FIG. 1) des rechten Riemens 42, und ein vorderer Endabschnitt ist vom Winkelelement aufwärts gekrümmt und in Eingriff mit einer Füllplatte 130, von der ebenfalls ein Abschnitt in FIG. 7 zu sehen ist, die am Boden der Seitenwand 22 befestigt ist und sich auswärts nach oben erstreckt und in dichtem Eingriff mit dem Längsstrang 105 des rechten Riemens 42 ist, so dass ein Spalt, der zwischen dem Riemenstrang 105 und der Seitenwand 22 abgegrenzt ist, geschlossen ist. Demgemäß werden verstreute oder minderwertige Stücke des Ernteguts, die durch den aufrecht angeordneten Strang 128 des rechten Riemens 42 in Richtung der rechten Schnecke 110 abwärts befördert werden, von dem Schild 126 abgefangen und an der Schnecke 110 vorbei geführt, wo sie auf dem Riemenstrang 105 und/oder der Füllplatte 130 abgelegt werden, wobei letztere ebenfalls verhindert, dass minderwertige oder verstreute Ernteguthalme die Zufuhr des Netzbindematerials 78 beeinträchtigen. Es wird hier angemerkt, dass anstelle der zwei Schilde 126 ein einziger flexibler Schild verwendet werden kann, der sich zwischen den Stützen 124 erstreckt und mit diesen verbunden ist. Die Füllplatten 130 dienen ebenfalls dazu, zu verhindern, dass Luftströme, die zwischen den Seitenwänden 22 auftreten, die Zufuhr des Netzbindematerials 78 beeinträchtigen. Die innere Kante jeder Füllplatte 130 ist wie bei 132 zurückgerollt oder -gefaltet, so dass sie dem Riemenstrang 105 eine abgerundete Kante bietet, damit sie in dem Fall, dass der Riemen nicht korrekt läuft und in Kontakt mit der inneren Kante der Füllplatte kommt, den Riemen 42 nicht beschädigt. Jede der Füllplatten 130 ist jeweils mit einem aufwärts geneigten hinteren und vorderen Endabschnitt 134 und 136 versehen, die sicherstellen, dass die Stränge der Riemen 105 nicht in Kontakt mit den Endkanten der Füllplatten 130 kommen.

Wiederum unter Bezugnahme auf FIG. 3 ist ersichtlich, dass die Schnecke 110 um einen Abstand d vom Dehnring 112 nach außen versetzt ist. Dies erzeugt einen günstigen Einlaufwinkel, der ermöglicht, dass der Dehnring 112 in die Längsstränge des Netzmaterials 78 eingreift und es auswärts bewegt, wie unten ausführlicher beschrieben.

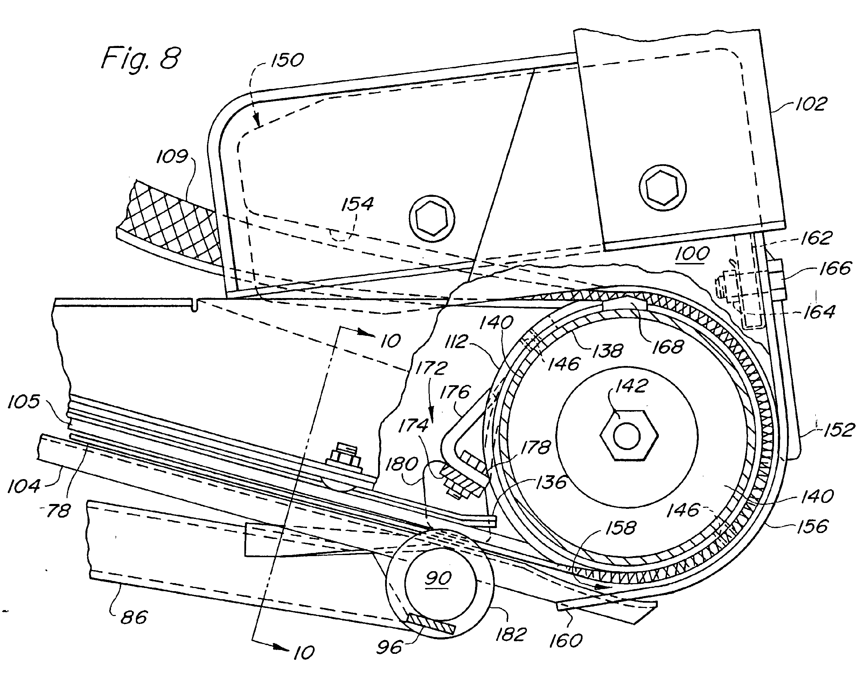

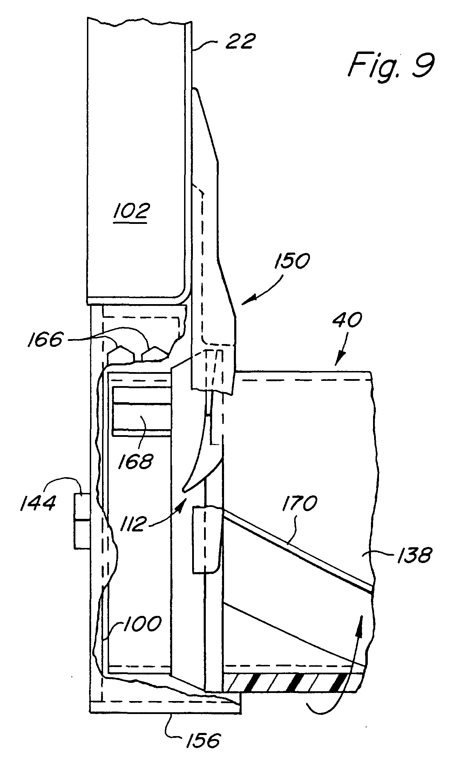

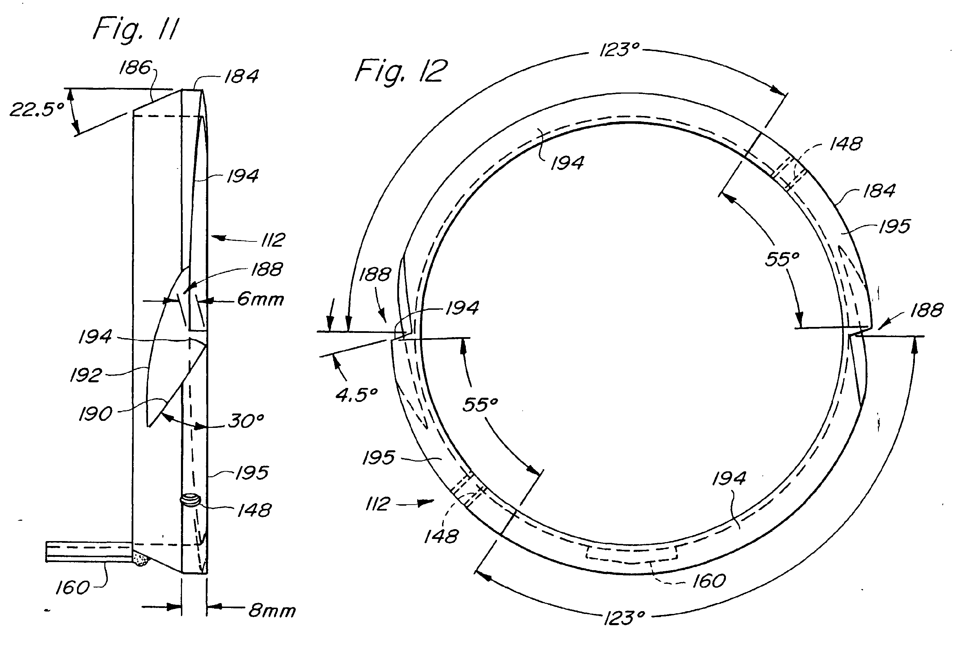

Unter Bezugnahme auf FIG. 7-9 ist ersichtlich, dass die vordere Klappenwalze 40 einen zylindrischen Hauptkörper 138 mit gegenüberliegenden Endabschnitten umfasst, die sich jeweils unterhalb der gegenüberliegenden Seitenwände 22 erstrecken, wobei der Körper Lager 140 in seinen gegenüberliegenden Enden enthält, die jeweilige innere Laufringe aufweisen, die an einer festen hexagonalen Durchgangswelle 142 befestigt sind, deren gegenüberliegende Enden mit einem Innengewinde versehen sind und durch entsprechende Schrauben 144 in Position gehalten werden (FIG. 2), die sich durch die vertikalen Seitenplatten 100 erstrecken, die einen Teil der Stützkonstruktion bilden, die an den Seitenwänden 22 befestigt ist. Am zylindrischen Walzenkörper 138 sind der rechte und linke Netzbindematerialdehnring 112 derart befestigt, dass sie sich jeweils unterhalb der rechten und linken Klappenseitenwand 22 erstrecken, wobei nur der rechte Dehnring gezeigt ist. Es versteht sich, dass der linke Dehnring ein Spiegelbild des rechten Dehnrings 112 ist. Der Dehnring 112 weist einen Innendurchmesser auf, der nahezu dem Außendurchmesser des Walzenkörpers 138 entspricht, wobei der Dehnring durch Anziehen eines Paars von Einstellschrauben 146 (FIG. 8) in Position gehalten wird, welche in Gewindelöchern 148 (FIG. 11 und 12) aufgenommen werden, die sich radial durch den Dehnring 112 erstrecken.

An unteren inneren Stellen der rechten und der linken Seitenwand 22 ist jeweils eine rechte und eine linke Führungsplatte befestigt, von denen nur die rechte Führungsplatte 150 gezeigt ist, wobei es sich versteht, dass die linke Führungsplatte ein Spiegelbild der Führungsplatte 150 ist. Die Führungsplatte 150 umfasst einen unteren vorderen Schutzabschnitt 152, der um einen Abschnitt des Dehnrings 112 auf der Innenseite der Klappenseitenwand 22 gekrümmt ist und von diesem beabstandet ist, so dass ein ringförmiger Durchgang für das Netzmaterial 78 abgegrenzt wird, von dem hereinkommendes Erntegut durch den Schutzabschnitt 152 ferngehalten wird. Die Führungsplatte 150 umfasst einen im allgemeinen dreieckigen Entlastungsbereich, der durch eine Stufe 154 gebildet wird, die sich aus einer Position in der Nähe der Elf-Uhr-Position der Walze 40 von einer äußeren Fläche der Führungsplatte 150 einwärts erstreckt und zu deren hinterem Ende geneigt ist. Dieser Entlastungsbereich grenzt zusammen mit der Seitenwand 22 der Ballenpresse einen Durchgang ab, durch den die Randkantenabschnitte des Netzmaterials 78 laufen, wenn das Netzmaterial während des Wickelns eines Ballens 58 in die Ballenpresskammer 56 gezogen wird.

Die vertikalen Stützplatten 100, von denen die gegenüberliegenden Enden der Walze 40 gestützt werden, weisen jeweils eine aufrecht stehende vordere Kante auf, die sich vom Boden der Stützstrebe 102 abwärts erstreckt, so dass sie sich gerade vor der Walze 40 befindet, wobei der aufrechte Abschnitt in etwa der Drei-Uhr-Position der Walze in einen gebogenen Abschnitt übergeht, der sich in einem festen Radius um die Achse der Walze herum bis in etwa die Sieben-Uhr-Position der Walze fortsetzt, wo er gerade wird und ein kurzes Stück rückwärts verläuft, wobei dieser Radius etwas größer ist als der Radius des Dehnrings 112 der Walze 40. Ein Umhüllungsschild 156, der aus einem J-förmigen Band gebildet ist, ist so angeordnet, dass er mit dem Schutzabschnitt 152 der Führungsplatte 150 zusammenwirkt, um Erntegut, das von der Pickup 62 zugeführt wird, daran zu hindern, mit dem Abschnitt des Dehnrings 112 in Kontakt zu kommen, der sich außerhalb der Seitenwand 22 befindet. Zu diesem Zweck steht eine innere Kante des Stiels des J mit einer äußeren Fläche des Schutzabschnitts 152 in Eingriff, wobei ein äußerer Rand des Stiels die aufrechte Kante der Stützplatte 100 überlappt. Der Haken des J ist in einem derartigen Radius gebildet, dass er dicht um die gebogene Kante der Stützplatte 100 passt und derart von dem Dehnring 112 beabstandet ist, dass er einen ringförmigen Freiraum oder Spalt 158 abgrenzt, um den Durchgang des Netzmaterials 78 zu ermöglichen. Dieser Spalt 158 ist vorzugsweise so bemessen, dass ein Abstand von etwa 3 - 6 mm zwischen dem Außendurchmesser des zugehörigen Dehnrings 112 und dem Schild 156 besteht. Das hintere Ende des Schildes 156 ist wie bei 160 abwärts abgewinkelt, um einen reibungslosen Eintritt des Netzmaterials 78 in den Spalt 158 zu ermöglichen. Um jeden der Umhüllungsschilde 156 in Position zu halten, ist eine Befestigungslasche 162 an einer oberen vorderen Stelle auf der Innenseite einer jeweiligen Stützplatte 100 angeordnet und dort sowie am Boden der Seitenwandstrebe 102 angeschweißt. Ein Paar U-förmige Blechschnappmuttern 164 ist oberhalb der unteren Kante der Lasche 162 aufgenommen und jeweils zu einem Paar von quer beabstandeten Löchern ausgerichtet, die in der Lasche vorgesehen sind. Das obere Ende des Schildes 156 ist mit einem ebenso beabstandeten Paar von Löchern versehen, und ein Paar Schrauben 166 ist in den ausgerichteten Löchern aufgenommen und in die Schnappmuttern 164 geschraubt, um den Schild 156 zu befestigen.

Um zu verhindern, dass sich minderwertiges Erntegut, d.h. kurze Stücke von Stängeln und dergleichen, in dem teilweise umschlossenen Bereich um das Ende der Walze 40 ansammelt und die Zufuhr des Netzmaterials 78 in die Ballenpresskammer 56 beeinträchtigt, ist die innere Kante eines axial vorstehenden Ausräumers 168 an die äußere Fläche des Dehnrings 112 geschweißt. Der Ausräumer 112 räumt den äußeren Abschnitt des ringförmigen Freiraums 158 aus und schiebt Erntegutstücke, die sich dort befinden, über das hintere Ende 160 des Schildes 156 nach draußen.

Erntegutstücke, die während des Zeitraums, in dem Ballen gebildet werden, d.h. zwischen Bindevorgängen, nicht aus dem umschlossenen Raum zwischen den Strängen der Riemen 46 und 105 entweichen, werden durch die Riemenstränge 105 zur unteren vorderen Walze 40 befördert. Um die Entfernung dieser Erntegutstücke zu unterstützen, so dass sie sich nicht anhäufen und keine Netzzufuhrprobleme verursachen, ist die Fläche des Kernstücks 138 der Walze 40, die sich zwischen den Seitenwänden 22 erstreckt, mit einem rechten und linken spiralförmigen Streifen 170 versehen, die zur Achse der Walze 40 geneigt sind, so dass sie verursachen, dass hängengebliebene Erntegutstücke von den Dehnringen 112 wegbewegt werden. Die äußeren Enden der spiralförmigen Streifen 170 sind jeweils bündig mit einem ebenen inneren Flächenabschnitt der Dehnrings 112 in Eingriff, wie unten ausführlicher beschrieben, wobei dieser Eingriff sicherstellt, dass das Netzmaterial nicht durch die äußeren Enden der Streifen behindert wird. Des weiteren neigen die spiralförmigen Streifen 170 dazu, ein Schütteln der Riemenstränge 105 zu verursachen, aufgrund dessen die Erntegutstücke auf dem einen oder anderen Weg in Richtung der Spalte wandern, die zwischen benachbarten Riemen abgegrenzt sind. Die Erntegutstücke, die um die Walze 40 befördert werden, kommen in Eingriff mit einem vorderen Ende eines Abstreifers oder Schabers 172, der durch ein Winkelelement gebildet ist, das sich in Längsrichtung parallel zur Walze 40 erstreckt und dessen gegenüberliegende Enden jeweils an Laschen 174 befestigt sind, die an die Innenflächen der gegenüberliegenden Seitenplatten 100 geschweißt sind. Der Abstreifer 172 weist einen ersten Schenkel 176 auf, der aufwärts und vorwärts in einem Winkel von 40 - 50° in einer Position genau hinter der Walze 40 abgewinkelt ist, wobei der Schenkel 176 zwischen der Neun-Uhr- und der Zehn-Uhr-Position der Walze an einem Radius von der Mitte der Walze aus endet, der etwas größer ist als der, der durch eine Außenperipherie der spiralförmigen Streifen 170 gebildet wird. Ein zweiter Schenkel 178 des Schabers 172 ist abwärts und vorwärts in einem Winkel von 25 - 35° zur Horizontalen abgewinkelt und endet in einem Abstand zur Mitte der Walze 40, der etwas größer ist als der des begrenzenden Endes des Schenkels 176. Die spiralförmigen Streifen 170 und der Abstreiferschenkel 176 wirken zusammen, um die Größe von minderwertigen oder verstreuten Erntegutstücken zu verringern, die, wenn sie von der Walze 40 abgestreift werden, über die obere Fläche des Schenkels 176 abwärts gleiten und hoffentlich durch die Spalte zwischen den Riemensträngen 105 nach draußen gleiten. Erntegutstücke, die unter dem Schenkel 176 hergleiten, gleiten hoffentlich ebenfalls durch die Spalte zwischen den Riemensträngen 105, wenn jedoch diese Stücke und jene, die vom Abstreifer 172 abgestreift werden, nicht durch die Riemenspalte fallen, werden sie erneut um die Walze 140 herumgeführt, wo ihre Größe durch die Wirkung der spiralförmigen Streifen 170 und des Abstreiferschenkels 176 wiederum verringert wird.

An quer beabstandete Stellen entlang der Unterseite des zweiten Schenkels 178 des Abstreifers 172 angeschweißt und von diesen abwärts vorstehend, befindet sich eine Mehrzahl von im allgemeinen Parallelogramm-förmigen, flachen Zentrierriemenführungen 180. Wie aus FIG. 10 ersichtlich, sind diese Riemenführungen 180 jeweils in den Spalten zwischen sämtlichen benachbarten Paaren von Riemensträngen 105 angeordnet, abgesehen von dem äußeren Paar von Riemensträngen 105 an jeder der gegenüberliegenden Seiten der Entladeklappe 20. Obwohl die jeweiligen unteren Flächen der Riemenführungen 180 unterhalb der Riemenstränge 105 angeordnet gezeigt sind, ist dies die Folge davon, dass die Riemenstränge 105 dünner gezeigt sind und das Netzmaterial 78 dicker gezeigt ist als sie tatsächlich sind, damit das Netzmaterial 78 und sein Weg um die Walze 40 herum zu erkennen sind. Tatsächlich enden die Unterseiten der Zentrierführungen 180 etwa 2 mm oberhalb der Unterseiten der Riemenstränge 105, damit sie den Durchlauf des Netzmaterials 78 zu dem Spalt, der zwischen den Riemen 42 und der Walze 40 gebildet ist, nicht behindern. Des weiteren sind die Unterseiten der Führungen 180 oberhalb der Traverse 90 der Netzbindematerialführung oder -stütze 84 in einem Abstand beabstandet, der ausreichend kleiner ist als die Stärke der Riemenstränge 105, so dass letztere nicht unter die Führungen 180 gebogen werden.

Ein Paar scheibenartige äußere Riemenführungen 182 ist vorgesehen, um das äußere Paar Riemenstränge 105 an jeder der gegenüberliegenden Seiten der Entladeklappe 20 daran zu hindern, sich seitwärts in die Dehnringe 112 zu bewegen, wobei die Riemenführungen 182 um die zylindrische Traverse 90 der Netzbindematerialführungs- oder -stützkonstruktion 84 aufgenommen sind und an dieser befestigt sind. Das äußere Paar Riemenführungen 182 ist jeweils innerhalb von innersten Abschnitten der Dehnringe 112 angeordnet. Die äußeren Riemenführungen 182 erstrecken sich jeweils aufwärts zwischen den Seitenwänden 22 und den äußeren Seiten der äußeren Riemenstränge 105 und enden etwa 2 mm unterhalb der oberen Fläche der Riemenstränge 105. Der Grund für die Verwendung von äußeren Riemenführungen, die aufwärts anstatt abwärts neben den Riemen vorstehen, liegt darin, dass Spannungen im Netz ein Heraufziehen der Netzstränge gegen die Walze zwischen der äußeren Kante des äußeren Riemenstrangs 105 und dem benachbarten Dehnring 112 verursachen, und eine abwärts vorstehende Riemenführung an der Außenseite des Riemenstrangs 105 würde wie eine Wand wirken, die das Netzmaterial davon abhielte, die Dehnringe 112 zu erreichen. Da jedoch die äußeren Riemenführungen 182 aufwärts zwischen den äußeren Riemensträngen 105 und den Seitenwänden 22 vorstehen, bewegt sich das Netz natürlich über die Oberseite der Führungen 182, was den Dehnringen 112 ermöglicht, in das Netzmaterial einzugreifen und es zu dehnen. Es ist anzumerken, dass die oberen Flächen der Riemenführungen 182 jeweils unterhalb der unteren Flächen der Füllstreifen 130 um einen Abstand beabstandet sind, der kleiner ist als die Stärke des Riemenstrangs 105, so dass letzterer sich nicht auswärts über die Riemenführungen 182 bewegen kann und die Dehnringe 112 nicht beeinträchtigt.

Unter Bezugnahme auf FIG. 11 und 12 ist ersichtlich, dass die äußere Fläche oder Außenperipherie des Dehnrings 112 einen Abschnitt 184 mit konstantem Durchmesser umfasst, der bis auf den Abstreifer 160 eine größere Breite aufweist, die etwa ein Drittel der axialen Breite des Dehnrings 112 ausmacht, wobei die verbleibenden zwei Drittel der axialen Breite des Dehnrings die Form eines konischen Abschnitts 186 aufweisen, dessen großes Ende mit dem äußeren axialen Ende des Abschnitts 184 mit konstantem Durchmesser verbunden ist. Der konische Abschnitt 186 bildet vorzugsweise einen Winkel von etwa 22 1/2° zu einer axialen Linie an der Peripherie des Abschnitts mit konstantem Durchmesser 184, wobei Winkel im Bereich von etwa 15 - 30° ebenfalls zweckmäßig sind. An diametral gegenüberliegenden Stellen des Dehnrings 112 sind keilförmige Netzzufuhrkerben oder -rillen 188 angeordnet, die jeweils eine erste und zweite zusammenlaufende Seite 190 und 192 aufweisen, die sich treffen und einen Öffnungswinkel von 70° (nicht gezeigt) bilden, wobei Winkel im Bereich von etwa 50 - 90° ebenfalls zweckmäßig sind. Die erste Rillenseite 190 befindet sich in einer ersten Ebene, die vorzugsweise einen Öffnungswinkel von 30° mit einer zweiten Ebene bildet, die sich an einem inneren Ende des Dehnrings 112 befindet und senkrecht zu dessen Rotationsachse angeordnet ist, wobei Winkel im Bereich von etwa 10° - 60° ebenfalls zweckmäßig sind. Aufgrund des konischen Abschnitts 186 des Rings 112 werden die Kerben 188 flacher, je weiter sie sich auswärts erstrecken, und jede von ihnen endet etwa auf halber Strecke über die axiale Ausdehnung der konischen Fläche 186, so dass sie sich dort auf der Fläche des konischen Abschnitts befindet, wo sie sich an ihren hinteren Enden treffen in Bezug auf die Rotationsrichtung des Rings 112, wobei diese Richtung im Uhrzeigersinn verläuft, wie aus FIG. 12 ersichtlich ist. Die innere achsenseitige Fläche des Rings 112 ist mit zwei Einlaufflächenabschnitten 194 versehen, die den Kerben 188 im Verhältnis zur Rotationsrichtung des Rings jeweils voreilen. Insbesondere läuft jeder Einlaufflächenabschnitt 194 über eine Strecke von 6 mm stufenweise konisch zu, und zwar in einem Bogen von 123° von einem vorderen Ende in einer Position von maximaler Breite des Abschnitts mit konstantem Durchmesser 184 zu einem hinteren Ende der Einlauffläche, die an einer Stelle von minimaler Breite des Abschnitts 184 an der Seite 192 der Kerbe 188 an einer Stelle entlang eines Durchmessers des Rings 112 endet, die dem vorderen Ende der Seite 190 um 4,5° voransteht. Die Längen der Einlaufflächen 194 sind auch dann noch zweckmäßig, wenn sie etwas kürzer oder länger sind, zum Beispiel könnte ein Bogen im Bereich von etwa 45° - 170° verwendet werden. Demgemäß werden die Längsstränge des gedehnten Netzmaterials 78 in diesem speziellen Fall zu einer Stelle an der Kerbenseitenwand 190 geführt, die sich axial 6 mm innerhalb jeder der Kerben 188 befindet, so dass sie dadurch über die ansteigende Fläche 186 geführt werden.

Hinter jeder der Kerben 188 jedes Dehnrings 112 befindet sich eine flache oder ebene vertikale innerste Fläche 195, die sich über einen Bogen von etwa 55° erstreckt und die im rechten Winkel zur Rotationsachse des Dehnrings 112 angeordnet ist. Das äußere Ende des benachbarten spiralförmigen Streifens 170 ist in Eingriff mit einer der Flächen 195, so dass zwischen den Dehnringen 112 und den spiralförmigen Streifen 170 kein Spalt vorhanden ist. Eine andere Funktion der Flächen 195 jedes Dehnrings 112 ist es, als Riemenführung zu wirken, die mit der äußeren Seite des benachbarten Riemenstrangs 105 in Eingriff kommt, um zu verhindern, dass der Riemen in die Kerben 188 läuft.

Es ist anzumerken, dass, während zwei Kerben 188 gezeigt sind, eine einzelne Kerbe oder mehr als zwei Kerben verwendet werden könnten und dass die Winkellänge der Einlauffläche oder - flächen zur Kerbe oder zu den Kerben auch mit einem anderen Wert als 123° zufriedenstellend funktionieren kann.

Unter nochmaliger Bezugnahme auf FIG. 3 ist ersichtlich, dass die Zufuhr der Längsstränge des Netzmaterials 78 in die Kerben 188 verbessert ist, da die Schnecken 110 außerhalb der Dehnringe 112 angeordnet sind. Aufgrund des ansteigenden Abschnitts 186 des Dehnrings 112 neigt das gespannte Netz dazu, ausgedehnt zu bleiben. Damit quer verlaufende Stränge des Netzmaterials 78 nicht behindert und möglicherweise von einer Kante 194 geschnitten werden, die dort gebildet ist, wo die Wand 190 jeder Kerbe 188 die innere Seite des Dehnrings 112 kreuzt, ist jede Kante 194 geneigt, so dass sie einer radialen Linie nacheilt, die ein inneres Ende der Kante 194 um etwa 4,5° kreuzt, wobei größere Winkel ebenfalls zweckmäßig sind.

Wiederum bezugnehmend auf FIG. 7 und 8 ist ersichtlich, dass eine Platte 196, die in der Seitenansicht im allgemeinen dreieckig ist, dafür verwendet ist, einen Bereich auszufüllen, der sich unterhalb der Seitenwand 22 und hinter der Walze 40 befindet. Diese Platte 196 umfasst einen dreieckigen Führungs- oder Leitabschnitt 198, der von der Ebene der Seitenwand 22 auswärts gebogen ist, wobei ein vorderes Ende des Leitabschnitts 198 in Eingriff mit oder zumindest in dicht beabstandetem Verhältnis zu der konischen Fläche 186 des Dehnrings 112 in einer Position angeordnet ist, die sich in der Nähe der Elf-Uhr-Position der Walze 40 befindet, wie aus FIG. 8 ersichtlich. Von seiner Stelle benachbart zur konischen Fläche 186 ist das vordere Ende des Leitabschnitts 198 abwärts und einwärts um den Dehnring 112 gekrümmt. Dementsprechend bildet der Leitabschnitt 198 eine einwärts gerichtete, abgewinkelte Fläche, die einen Freiraum zur Aufnahme der äußeren Randabschnitte 109 des Netzmaterials 78 bereitstellt und minderwertige Erntegutstücke in Richtung der Oberseite des inneren Riemenstrangs 105 führt, so dass sie in den Spalt zwischen dem Riemenstrang und der Walze 40 fallen.

Der Betrieb der Ballenpresse 10 hinsichtlich der Zufuhr des Netzmaterials 78 in die Ballenpresskammer 56 wird hier aufgeführt. Unter der Annahme, dass ein Ballen 58 gerade in der Ballenpresskammer 56 gebildet worden ist und gewünscht wird, denselben mit dem Netzmaterial zu binden, wird der Antrieb der Zufuhrwalzen 74 und 76 des Netzbindemechanismus 70 aktiviert, so dass das Netzmaterial 78 gegen die aufrechten Stränge 128 der Riemen 42 befördert wird, die sich zwischen der oberen hinteren Klappenwalze 36 und der unteren hinteren Klappenwalze 38 erstrecken. Diese Riemenstränge 128 befördern das Netzmaterial 78 abwärts zu dem Spalt 80, der zwischen der Führungsplatte 82 und den Riemensträngen 128 an der Walze 38 gebildet ist. Das Netzmaterial 78 ist breiter als die Ballenpresskammer 56, und das vordere Ende 120 des Schneckengangs der Schnecken 110, die an den gegenüberliegenden Enden der Walze 38 angeordnet sind, kommen aggressiv mit den Längssträngen des Netzmaterials in Eingriff und heben sie an, um das Netz auswärts auf seine volle Breite zu dehnen, wobei diese Aggressivität durch den Umstand verbessert wird, dass die Oberflächengeschwindigkeit der Spiralen größer ist als die lineare Geschwindigkeit der Riemenstränge 105 und daher größer als die lineare Geschwindigkeit des Netzmaterials 78. Die sich in Längsrichtung erstreckenden Stränge 105 der Riemen 42 greifen in das Netzmaterial 78 ein und befördern es entlang der Netzführungsflächen, die durch die Oberseiten der Kanäle 104 der Führungskonstruktion 84 festgelegt werden, wobei das Netzmaterial in den Spalt eintritt, der zwischen den Ballenbildungsriemen und der Walze 40 im mittleren Bereich der Walze 40 gebildet ist, sowie in den ringförmigen Freiraum 158 zwischen dem Umhüllungsschild 156 und den Dehnringen 112 an den gegenüberliegenden Enden der Walze 40. Wenn das Netzbindematerial 78 die Oberseite der Walze 40 erreicht, wird es zwischen den Riemen 42 und dem Ballen 58 eingefangen, wobei letzterer eine Umfangsgeschwindigkeit aufweist, die größer ist als die Geschwindigkeit, mit der das Material durch die Zufuhrwalzen 74 und 76 läuft. Dementsprechend setzen der Ballen 58 und die Riemen 42 das Netzmaterial 78 unter Spannung, wenn es in die Ballenpresskammer 56 gezogen wird. Diese Spannung verursacht, dass die Breite des Netzmaterials 78 die Neigung zeigt, enger zu werden als die Breite der Ballenpresskammer 56. Die Dehnringe 112 wirken mit den Schnecken 110 zusammen, um sicherzustellen, dass das Netzmaterial 78, kurz bevor es in die Ballenpresskammer eintritt, eine Breite aufweist, die größer ist als die der Ballenpresskammer 56.

Unter Bezugnahme auf den offenbarten rechten Dehnring 112 kommt insbesondere der rechte Randabschnitt des gespannten Netzmaterials 78 in Eingriff mit den Kerben 188, wenn das Material um die Walze 40 läuft. Die abgewinkelten Seiten 190 der Kerben greifen in Längsstränge des Net zmaterials 78 ein und bewegen sie auswärts auf den konischen Abschnitt 186 des Dehnrings 112, wobei dieser konische Abschnitt die Stränge hält, sobald sie dort angeordnet sind, so dass das Netzmaterial 78, bevor es in die Kammer eintritt, auf eine Breite gedehnt wird, die größer ist als die der Ballenpresskammer 56. Der Eingriff der Kerben 188 mit den Längssträngen des Netzmaterials wird durch den Umstand unterstützt, dass sich die Schnecken 110 der unteren hinteren Klappenwalze 38 außerhalb der Dehnringe 112 befinden, und ebenfalls durch die Einlaufflächen 114, die an der inneren Seite des Abschnitts 184 mit konstantem Durchmesser der Dehnringe 112 gebildet sind, so dass die axiale Ausdehnung des Abschnitts 184 über einen Bogen von etwa 123° stufenweise abnimmt. Die Netzstütz- oder -haltefunktion des konischen Flächenabschnitts 186 wird zufriedenstellend ausgeführt, wenn der Flächenabschnitt 186 einen Winkel von mindestens 15° zu einer Linie bildet, die parallel zur Achse des Rings 112 ist.

Sobald das Netzmaterial 78 gerade über den höchsten Punkt der Walze 40 hinaus läuft, werden die Netzmaterialrandabschnitte 109, die sich auswärts über die Seitenwände 22 hinaus erstrecken, durch den Kanal, der zwischen dem Abschnitt der Führungsplatte 150 unterhalb der Stufe 154 und den Seitenwänden 22 festgelegt ist, in die Ballenpresskammer 56 gezogen, wobei die Randabschnitte daraufhin über den Enden des Ballens 58 angeordnet werden, wie in FIG. 1 gezeigt.

Verschiedene Konstruktionen dienen dazu, zu verhindern, dass minderwertige oder verstreute Erntegutstücke das Dehnen und die Zufuhr des Netzmaterials 78 beeinträchtigen, wenn es von der unteren hinteren Klappenwalze 38 zu der unteren vorderen Klappenwalze 40 und weiter in die Ballenpresskammer 56 läuft.

Insbesondere dienen die flexiblen Schilde 126, die auf der Innenseite der Klappenseitenwände 22 angeordnet und oberhalb der unteren hinteren Klappenwalze 38 abgewinkelt sind, dazu, Erntegutstücke abzufangen, die von dem aufrecht angeordneten hinteren Strang der Riemen 128 abwärts befördert werden, wobei die abgefangenen Erntegutstücke die abgewinkelten Schilde 126 bis zu den Oberseiten der Füllplatten 130 herabgleiten. So wird verhindert, dass diese Stücke abgefangenen Ernteguts aus der Entladeklappe 20 in der Nähe der Schnecken 110 austreten, und dementsprechend wird verhindert, dass sie die Zufuhr und Dehnung des Netzmaterials in diesen Bereichen beeinträchtigen. Dies betrifft besonders große Stücke von Stängeln von Mais oder Rohr, die ein Reißen des Netzmaterials verursachen und dessen Dehnung auf volle Breite verhindern können.

Die Füllplatten 130 erstrecken sich jeweils über die Spalte zwischen den gegenüberliegenden Seitenwänden 22 und den äußeren Riemensträngen 105, so dass sie einen Austritt von Erntegutstücken aus der Ballenpresskammer entlang der Seitenwände 22 und die dadurch bedingte Beeinträchtigung der Zufuhr des Netzmaterials 78 verhindern. Die Füllplatten 130 dienen ebenfalls dazu, zu verhindern, dass Luftströmungen, die durch den Betrieb der Riemen 42 erzeugt werden, den Durchgang des Netzmaterials beeinträchtigen. Erntegutstücke, die sich auf den Füllplatten 130 ansammeln, bewegen sich schließlich nach innen, wo sie entweder in die Spalte zwischen benachbarten Riemensträngen 105 fallen, wenn kein Netz vorhanden ist, oder vorwärts in den Spalt zwischen den Riemen und der unteren vorderen Klappenwalze 40 befördert werden. Dort kommen diese Erntegutstücke, wie ebenfalls andere Erntegutstücke, die von den Riemensträngen 105 vorwärts befördert werden, mit den spiralförmigen Streifen 170 der Walze 40 in Eingriff und werden von den Dehnringen 112 an den Enden der Klappenwalze 40 einwärts weg und um die Walze 40 herum befördert, bis sie in Eingriff mit dem Schenkel 176 des Abstreifers oder Schabers 172 kommen, wo die Erntegutstücke in kleinere Stücke gebrochen werden. Diese kleineren Stücke gleiten entweder die Außenseite des Abstreiferschenkels 176 herab und weg von der Walze 40, oder sie gleiten die Innenseite des Abstreiferschenkels 178 herab und in Richtung der Walze 40. In beiden Fällen fallen die Erntegutstücke entweder zwischen den Spalten der Riemenstränge 105 hindurch, oder sie werden erneut um die Walze 140 herum geführt, wo ihre Größe durch die Wirkung der spiralförmigen Streifen 170 gegen das Ende des Abstreiferschenkels 176 wiederum verringert wird. Bei der Unterstützung der Bewegung der Erntegutstücke, so dass sie zwischen die Riemenstränge 105 fallen, ist die Schüttelwirkung, die durch die spiralförmigen Streifen 170 auf die Riemenstränge 105 ausgeübt wird, von Bedeutung.

Auch die Umhüllungsschilde 156, die sich vor den Dehnringen 112 an den gegenüberliegenden Enden der unteren Klappenwalze 40 und um diese herum erstrecken, verhindern, dass Erntegut die korrekte Zufuhr des Netzmaterials stört. Dieses Erntegut stammt von jenem, das zum Ballenpresskammereinlass 60 befördert wird. Es wird angemerkt, dass Erntegutstängel, insbesondere große harte Stängel, wenn sie nicht abgefangen werden, von den Dehnringkerben 188 zu den Führungsplatten 150 befördert werden können und sich leicht verkeilen können, was Abnutzung und/oder einen Wärmestau verursachen kann. Dieses verkeilte Erntegut beeinträchtigt ebenfalls den Weg des Netzmaterials, zum Beispiel kann es das Netzmaterial einwärts drücken und verhindern, dass das Netz über das Ende oder die Kante des Ballens läuft. Das Netzmaterial 78 tritt von der Rückseite des Schildes 156 ein und läuft durch den Spalt 158, der zwischen dem Schild 156 und der Walze 40 gebildet ist.

Der Ausräumer 168, der von dem Dehnring 112 getragen wird, sorgt dafür, dass kleine Erntegutstücke, die ihren Weg in den Spalt finden, lose bleiben und aus dem Bereich ausgeräumt werden und hilft daher, zu verhindern, dass sich Erntegut zwischen dem Dehnring 112 und dem Schild 156 und/oder der Führungsplatte 150 festsetzt. Zusätzlich zu dem Ausräumer 168, der verhindert, dass sich Erntegut in der Nähe des Dehnrings 112 ansammelt, verhindert ebenfalls der abgewinkelte Leitabschnitt 198 der Platte 196 eine solche Ansammlung, indem er kleine Erntegutstücke in den Spalt zwischen der Klappenwalze 40 und der Riemen-Ballenpresskammer 56 führt, und zwar über den Net zmaterial durchgang, der von der Führungsplatte 150 und der Seitenwand 22 abgegrenzt wird.

Zur korrekten Dehnung des Netzmaterials 78 durch die Dehnringe 112 tragen die äußeren Riemenführungen 182 bei, die sich aufwärts zwischen jedem äußeren Paar von Riemensträngen 105 erstrecken, so dass sie dem Netzmaterial 78 ermöglichen, einen natürlichen Weg oberhalb der Führungen 182 zu einzuschlagen, wenn das Material 78 gespannt und aufwärts gezogen wird, wenn es durch die Wirkung eines sich drehenden Ballens in die Ballenpresskammer gezogen wird.

Daher ist ersichtlich, dass für die zuverlässige Zufuhr von Netzbindematerial, das breiter als die Ballenpresskammer ist, zur Ballenpresskammer das Zusammenwirken verschiedener Elemente geeignet ist, damit die Zufuhr derart erfolgt, dass sich das Netzmaterial über die gegenüberliegenden Enden des Ballens erstreckt, und sichergestellt wird, dass das Material, bevor es in die Ballenpresskammer eintritt, auf eine Breite gedehnt wird, die größer ist als die der Ballenpresskammer, sowie dass verstreute oder minderwertige Erntegutstücke daran gehindert werden, das Dehnen und die Zufuhr des Netzmaterials zu beeinträchtigen.

Während die vorgenannten Komponenten vorteilhaft in einer Rundballenpresse 10 mit der Zuführung eines Umhüllungsmittels 78 zusammenwirken, dessen Breite die der Ballenbildungskammer 56 übersteigt, können einzelne Zusammenbauten, wie z. B. der Schildzusammenbau 122, die Riemenführungselemente 180, 182, der Füllstreifen 130 und der Schaber 172 auch unabhängig voneinander und auch bei einer Rundballenpresse Verwendung finden, in der das Umhüllungsmaterial die gleiche Breite wie die Ballenbildungskammer aufweist; insbesondere stellen diese Merkmale jeweils eigenständige Erfindungen dar.

## Patentansprüche

1. Rundballenpresse (10) mit einer Ballenbildungskammer (56), die umfangsseitig von mehreren Walzen (26, 28, 30, 32, 36, 38, 40 und 34) und seitlich von Seitenwänden (22) umgeben ist, und mit einer Umhüllungsvorrichtung (70), die über wenigstens zwei der Walzen (38, 40) Umhüllungsmaterial (78) zu einem Einlass (60) der Ballenbildungskammer (56) führt, wobei das Umhüllungsmaterial (78) und die es führenden Walzen (38, 40) breiter sind als die Ballenbildungskammer (56) und die Walzen (38, 40) an ihren axialen Endbereichen mit Dehnelementen (110, 112) versehen sind, **dadurch gekennzeichnet, daß** die Dehnelemente (112) auf der dem Einlass (60) zugelegenen Walze (40) jeweils einen Dehnring (112) umfassen, der mindestens eine Kerbe (188) mit einer ersten Seite (190) umfasst, die zum Eingriff in Längsstränge von äußeren Randabschnitten des Umhüllungsmaterials (78) angeordnet ist und auswärts abgewinkelt ist, um diese Stränge nach außerhalb der inneren Fläche zu bewegen, wobei das Umhüllungsmaterial 78 auf eine Breite gedehnt wird, die größer ist als die der Ballenbildungskammer (56).

2. Rundballenpresse gemäß Anspruch 1, wobei jeder Dehnring (112) mit mehr als einer Kerbe (188) versehen ist und die Kerben (188) in einem Winkel voneinander beabstandet sind.

3. Rundballenpresse gemäß Anspruch 1 oder 2, wobei jeder Dehnring (112) einen inneren Abschnitt (184) mit konstantem Durchmesser umfasst, der mit einem äußeren konischen Abschnitt (186) verbunden ist, wobei der Durchmesser des konischen Abschnitts (186) nach außen hin abnimmt; und wobei sich mindestens eine Kerbe (188) teilweise in einen Flächenbereich des konischen Abschnitts (186) erstreckt und die Kerbe (188) dazu geeignet ist, Umhüllungsmaterial 78 auswärts über den konischen Abschnitt (186) zu führen, wo es aufgrund von Zugkräften im Umhüllungsmaterial (78) auf dem konischen Abschnitt (186) bleibt, bis es durch einen sich drehenden Ballen (58), der gebunden wird, in die Ballenbildungskammer (56) gezogen wird.

4. Rundballenpresse nach einem oder mehreren der vorherigen Ansprüche, **dadurch gekennzeichnet, daß** die erste Seite (190) jeder Kerbe (188) in einer Ebene liegt, die einen Winkel im Bereich von etwa 10 - 50° mit einer Ebene bildet, die sich senkrecht zu einer Rotationsachse der Walze (40) erstreckt.

5. Rundballenpresse nach einem oder mehreren der vorherigen Ansprüche, **dadurch gekennzeichnet, daß** sich die mindestens eine Kerbe (188) zu einer Innenseite des betreffenden Dehnrings (112) erstreckt und die Innenseite eine einwärts gerichtete Einlauffläche (194) aufweist, die so geformt ist, **dass** die Breite des Dehnrings (112) von einer ersten Stelle, die der Kerbe (188) im Verhältnis zu einer Rotationsrichtung der Walze (40) im Normalbetrieb voransteht, zu einer zweiten Stelle innerhalb der Kerbe (188) abnimmt.

6. Rundballenpresse nach einem oder mehreren der vorherigen Ansprüche, **dadurch gekennzeichnet, daß** sich die Einlauffläche (194) über einen Bogen in einem Bereich von (45) bis 170° erstreckt.

7. Rundballenpresse nach einem oder mehreren der vorherigen Ansprüche, **dadurch gekennzeichnet, daß** die Kerbe (188) eine zweite Seite (192) umfasst, die einen Winkel im Bereich von etwa 50 - 90° mit der ersten Seite (190) bildet.

8. Ballenpresse nach einem oder mehreren der vorherigen Ansprüche, **dadurch gekennzeichnet, daß** eine vertikale Stützplatte (150) eng benachbart zu jedem äußeren Ende der Walze (40) angeordnet ist, jeder Dehnring (112) einwärts auf der Walze (40) von einem benachbarten äußeren Ende derselben beabstandet ist und sich ein Schild (152) vorne abwärts und um einen unteren Abschnitt des Dehnrings (112) in beabstandetem Verhältnis zum Dehnring (112) und zur Walze (40) erstreckt, so **dass** er einen bogenförmigen Freiraum um die Walze (40) abgrenzt, wobei der Schild (152) ein hinteres Ende (160) aufweist, das eine Öffnung abgrenzt, durch die Umhüllungsmaterial (78) auf seinem Weg zur Ballenbildungskammer (56) zu dem Freiraum gelangen kann.

9. Ballenpresse nach einem oder mehreren der vorherigen Ansprüche, **dadurch gekennzeichnet, daß** ein Ausräumelement (168) an einer äußeren Endposition jedes Dehnrings (112) befestigt ist und von dort auswärts vorsteht, um den Freiraum um den Umfang jenes Abschnitts der Walze (40) herum, der außerhalb des benachbarten Dehnrings (112) angeordnet ist, auszuräumen.

10. Ballenpresse nach einem oder mehreren der vorherigen Ansprüche, **dadurch gekennzeichnet, daß** wenigstens ein Ballenbildungsriemen (42) über eine drehbare Walze (40) geführt wird und eine Führungsplatte (196) unterhalb von jeder Seitenwand (22) angebracht ist und einen Führungsabschnitt (198) umfasst, der über den benachbarten Dehnring (112) hinweg und in nächster Nähe zu diesem geneigt ist, wobei der Führungsabschnitt (198) derart angeordnet ist, **dass** Erntegutstücke, die von der mindestens einen Kerbe (188) befördert werden, auf einen äußeren Ballenbildungsriemen (42) geleitet werden, so **dass** sie in Richtung eines zweiten Spalts befördert werden, der zwischen der Walze (40) und den Ballenbildungsriemen (42) gebildet ist.

11. Ballenpresse nach einem oder mehreren der vorherigen Ansprüche, **dadurch gekennzeichnet, daß** jeder Dehnring (112) mit einer senkrechten, ebenen innersten Fläche (195) versehen ist, die senkrecht zur Achse und neben dem Lauf einer Außenkante eines Ballenbildungsriemens (42) angeordnet ist.

12. Dehnring zur Verwendung in einem Netzbindemechanismus einer Rundballenpresse, mit einem umfänglichen ersten Abschnitt (184) mit konstantem Durchmesser, der mit einem umfänglichen zweiten, konischen Abschnitt (186) verbunden ist, dessen Durchmesser in einer Richtung axial vom ersten Abschnitt (184) weg abnimmt, eine Kerbe (188), die sich über den ersten Abschnitt (184) hinweg in den zweiten Abschnitt (186) erstreckt und eine erste Seite (190) aufweist, die hinsichtlich einer Normalbetriebsrotationsrichtung des Dehnrings (112) derart ausgerichtet ist, dass sie ein vorderes Ende an einer Seite des ersten Abschnitts (184) und ein hinteres Ende an dem zweiten, konischen Abschnitt (186) aufweist.

13. Dehnring gemäß Anspruch 12, wobei der erste Abschnitt (184) mit einer Endseite des Dehnrings (112) verbunden ist, die mindestens eine Einlauffläche (194) abgrenzt, die sich über einen Bogen im Bereich von etwa 45° bis 170° in der Länge erstreckt, die im Verhältnis zu einer beabsichtigten Betriebsrotationsrichtung des Dehnrings (112) ein hinteres Ende aufweist, das in der mindestens einen Kerbe (188) angeordnet ist, wobei die Breite des ersten Abschnitts (184) des Dehnrings (112) vom vorderen Ende zum hinteren Ende der Einlauffläche (194) abnimmt.

14. Dehnring gemäß Anspruch 12 oder 13, mit mindestens einer zweiten Kerbe (188), die in einem Winkel von der mindestens einen Kerbe (188) beabstandet ist.

15. Dehnring nach einem oder mehreren der vorherigen Ansprüche 12 bis 14, **dadurch gekennzeichnet, daß** der Dehnring (112) eine zweite Einlauffläche (194) ähnlich der mindestens einen Einlauffläche (194) umfasst, deren hinteres Ende in der zweiten Kerbe (188) angeordnet ist.

16. Dehnring nach einem oder mehreren der vorherigen Ansprüche 12 bis 15, **dadurch gekennzeichnet, daß** die erste Seite (190) der mindestens einen Kerbe (188) in einer ersten Ebene liegt, die einen Winkel im Bereich von etwa 10° bis 60° mit einer zweiten Ebene bildet, die senkrecht zu einer Rotationsachse des Dehnrings (112) angeordnet ist.

17. Dehnring nach einem oder mehreren der vorherigen Ansprüche 12 bis 16, **dadurch gekennzeichnet, daß** die mindestens eine Kerbe (188) eine zweite Seite (192) umfasst, die einen Winkel im Bereich von etwa 50° bis 100° mit der ersten Seite (190) bildet.

18. Dehnring nach einem oder mehreren der vorherigen Ansprüche 12 bis 17, **dadurch gekennzeichnet, daß** sich die mindestens eine Einlauffläche (194) und die eine Seite (190) an der ersten Fläche (195) treffen, so **dass** sie eine Kante abgrenzen, die auswärts von einer radialen Linie weg geneigt ist, welche ein inneres Ende der Kante in einem Winkel von mindestens 4° schneidet, wobei die radiale Linie der vorderen Kante voransteht.

19. Dehnring nach einem oder mehreren der vorherigen Ansprüche 12 bis 18, **dadurch gekennzeichnet, daß** die Fläche des konischen Abschnitts (186) einen Winkel von mindestens 15° mit einer Linie bildet, die sich parallel zu einer Rotationsachse des Dehnrings (112) erstreckt.

20. Dehnring nach einem oder mehreren der vorherigen Ansprüche 12 bis 19, **dadurch gekennzeichnet, daß** die innere Fläche (195) jedes Dehnrings (112) mit einer Einlauffläche (194) versehen ist, die derart geformt ist, **dass** die Breite des Dehnrings (112) von einer ersten Stelle, die der Kerbe (188) im Verhältnis zu einer Rotationsrichtung der unteren vorderen Walze (40) während des Normalbetriebs voransteht, zu einer zweiten Stelle innerhalb der Kerbe (188) abnimmt.

21. Dehnring nach einem oder mehreren der vorherigen Ansprüche 12 bis 20, **dadurch gekennzeichnet, daß** jeder Dehnring (112) mindestens eine zweite Kerbe (188), die in einem Winkel von der einen Kerbe (188) beabstandet ist, und eine zweite Einlauffläche (194) umfasst, die ebenso wie die, die der einen Kerbe (188) zugeordnet ist, der zweiten Kerbe (188) zugeordnet ist.

22. Rundballenpresse mit einer Ballenbildungskammer (56), die umfangsseitig von mehreren Walzen (26, 28, 30, 32, 36, 38, 40 und 34) umgeben ist, und mit einer Umhüllungsvorrichtung (70), die über wenigstens zwei der Walzen (38, 40) Umhüllungsmaterial (78) zu einem Einlass (60) der Ballenbildungskammer (56) führt, wobei das Umhüllungsmaterial (78) und die es führenden Walzen (38, 40) breiter sind als die Ballenbildungskammer (56) und die Walzen (38, 40) an ihren axialen Endbereichen mit Dehnvorrichtungen (110, 112) versehen sind, **dadurch gekennzeichnet, daß** die Dehnvorrichtungen (110) auf der der Umhüllungsvorrichtung (70) zugelegenen Walze (38) in der Form einer Wendel mit einem zylindrischen Körper (114) und einem Wendelsteg (120) ausgebildet ist, wobei sich der Wendelsteg (120) dort entlang erstreckt, sowie eine Windung aufweist, um das Umhüllungsmaterial (78) auswärts zu bewegen; wobei der erhöhte Wendelsteg (120), bei Drehung der unteren hinteren Walze (38) gegen den Uhrzeigersinn mit Blick auf ein rechtes Ende derselben betrachtet, ein vorderes Ende aufweist, das an einem Innendurchmesser des zylindrischen Körpers (114) beginnt und zu einer radialen Höhe von dem zylindrischen Körper (114) aus ansteigt, die mindestens so hoch ist wie der Rest des Wendelsteges (120).

23. Rundballenpresse gemäß Anspruch 22, wobei an den gegenüberliegenden Enden der dem Einlass (60) zugelegenen Walze (40) Dehnringe (112) mit einer Kerbe (188) zum Erfassen des Umhüllungsmaterials (78) vorgesehen sind, denen gegenüber die Wendelstege (120) der Dehnvorrichtungen (110) auf der der Umhüllungsvorrichtung (70) zugelegenen Walze (38) nach außen versetzt sind.

24. Rundballenpresse gemäß Anspruch 22 oder 23, wobei der Außendurchmesser der wendelartigen Dehnvorrichtungen (110) so gewählt ist, dass ihre Umfangsgeschwindigkeit größer ist als eine lineare Geschwindigkeit des Umhüllungsmaterials (78).

25. Rundballenpresse nach einem oder mehreren der Ansprüche 22 bis 24 **gekennzeichnet durch** eine Dehnvorrichtung (110) mit einem zylindrischen Körper (113, 144), einen Wendelsteg (120) mit einem größeren Abschnitt, der radial von dem zylindrischen Körper (113, 114) vorsteht und sich um diesen herum erstreckt und wobei der Wendelsteg (120) im Verhältnis zu einer normalen Rotationsrichtung der Dehnvorrichtung (110) während des Betriebs ein vorderes Ende aufweist, das an einem Innendurchmesser des zylindrischen Körpers (113) angeordnet ist und mit dem größeren Abschnitt verbunden ist, wobei der Wendelsteg (120) derart geformt ist, dass er Längsstränge des Umhüllungsmaterials (78) radial von einem Innendurchmesser des zylindrischen Körpers (113, 114) zur Oberseite des größeren Abschnitts des Wendelstegs (120) anhebt.

26. Rundballenpresse nach einem oder mehreren der vorherigen Ansprüche 22 bis 25, **dadurch gekennzeichnet, daß** der zylindrische Körper (113) eine Endfläche mit einem größeren Abschnitt, der in einer senkrechten Ebene angeordnet ist, die sich senkrecht zu einer Rotationsachse der Dehnvorrichtung (110) erstreckt, und mit einem kleineren Abschnitt aufweist, der das vordere Ende der Dehnvorrichtung (110) umfasst und von der senkrechten Ebene derart beabstandet ist, **dass** er den breitesten Abschnitt den Dehnvorrichtung (110) abgrenzt.

27. Rundballenpresse nach einem oder mehreren der vorherigen Ansprüche 22 bis 26, **dadurch gekennzeichnet, daß** das vordere Ende der Dehnvorrichtung (110) in eine Kerbe (117) übergeht, die in einem äußeren Flächenbereich des zylindrischen Körpers (113) gebildet ist.

28. Rundballenpresse nach einem oder mehreren der vorherigen Ansprüche, **gekennzeichnet durch** eine Schildkonstruktion (122), die eine längliche Schildstütze (124) umfasst, die an einer inneren Fläche einer Seitenwand (22) befestigt ist, so dass sie sich abwärts und vorwärts oberhalb der unteren hinteren Walze (38) erstreckt und **durch** ein Schildmittel (126), das an der Schildstütze (124) befestigt ist, an eine Seitenwand (22) angrenzt und sich zwischen einem hinteren Ende an einem aufrechten Strang (128) und einem vorderen Ende oberhalb eines sich in Längsrichtung erstreckenden Strangs (105) eines oder mehrerer Ballenbildungsriemen (42) erstreckt.

29. Rundballenpresse nach einem oder mehreren der vorherigen Ansprüche, **dadurch gekennzeichnet, daß** das Schildmittel (126) ein Paar Schilde umfasst, die aus einem elastischen Material konstruiert sind, wobei jeweils das hintere Ende der Schilde mit dem jeweiligen benachbarten aufrechten Strang (128) der Ballenbildungsriemen (42) in Eingriff ist.

30. Rundballenpresse nach einem oder mehreren der vorherigen Ansprüche, **dadurch gekennzeichnet, daß** jeder Schild aus einem rechtwinkligen Stück eines Riemenmaterials mit glatter Oberfläche konstruiert ist.

31. Rundballenpresse nach einem oder mehreren der vorherigen Ansprüche, **dadurch gekennzeichnet, daß** die Schildstützen (124) jeweils die Form eines Winkelelements aufweisen, dessen erste Seite an einer benachbarten Seitenwand (22 ) und dessen zweite Seite an dem Schildmittel (126) befestigt ist.

32. Rundballenpresse nach einem oder mehreren der vorherigen Ansprüche, **gekennzeichnet durch** einen länglichen, flachen Füllstreifen (130), der sich in Längsrichtung neben der unteren Kante jeder Seitenwand (22) erstreckt und an dieser befestigt ist und an einen benachbarten sich in Längsrichtung erstreckenden Riemenstrang (105) angrenzt.

33. Rundballenpresse nach einem oder mehreren der vorherigen Ansprüche, **dadurch gekennzeichnet, daß** mindestens ein Abschnitt eines inneren Randabschnitts (132) des Füllstreifens (130) auf sich selbst gefaltet ist, so **dass** er eine abgerundete innere Kante bildet.

34. Rundballenpresse nach einem oder mehreren der vorherigen Ansprüche, **dadurch gekennzeichnet, daß** der Füllstreifen (130) einen vorderen und einen hinteren Endabschnitt (136, 134) aufweist, die sich aufwärts von gegenüberliegenden Enden eines verbleibenden geraden Abschnitts des Füllstreifens (130) erstrecken.

35. Rundballenpresse nach einem oder mehreren der vorherigen Ansprüche, **dadurch gekennzeichnet, daß** die dem Einlass (60) zugelegene Walze (40) zwischen den Dehnvorrichtungen (112) mindestens ein Paar eines rechten und linken Wendelelements (170) aufweist, die sich einwärts an diesem entlang von den Dehnvorrichtungen (112) erstrecken

36. Rundballenpresse nach einem oder mehreren der vorherigen Ansprüche, **gekennzeichnet durch** einen Schaber (172) längs eines Teils des Umfangs der dem Einlass (60) zugelegenen Walze (40), mit einem Schenkel (176) zum Zusammenwirken mit dem Wendelelement (170).

37. Rundballenpresse nach einem oder mehreren der vorherigen Ansprüche, **dadurch gekennzeichnet, daß** der Schenkel 176 des Schabers (172) zu der Radialen der Walze (40) geneigt verläuft.

38. Rundballenpresse nach einem oder mehreren der vorherigen Ansprüche, **dadurch gekennzeichnet, daß** der Schaber (172) die Form eines Winkeleisens aufweist und der Schenkel (176) auf einen zweiten Schenkel (178) trifft, der mit Abstand zu der Walze (40) endet.

39. Rundballenpresse nach einem oder mehreren der vorherigen Ansprüche, **gekennzeichnet durch** äußere Riemenführungselemente (182), die jeweils benachbart zu dem Paar von Seitenwänden (22) angeordnet sind und aufwärts neben einem benachbarten Ballenbildungsriemen (42) vorstehen.

40. Rundballenpresse nach einem oder mehreren der vorherigen Ansprüche, **gekennzeichnet durch** eine Traverse (90) knapp hinter der dem Einlass (60) zugelegenen Walze (40), an der die äußeren Riemenführungselemente (182) befestigt sind.

41. Rundballenpresse nach einem oder mehreren der vorherigen Ansprüche, **dadurch gekennzeichnet, daß** die Traverse (90) direkt unterhalb eines mittleren Satzes von Riemenführungselementen (180) angeordnet ist und von diesen um einen Abstand beabstandet ist, der kleiner ist als eine Stärke der Ballenbildungsriemen (42).

42. Rundballenpresse nach einem oder mehreren der vorherigen Ansprüche, **dadurch gekennzeichnet, daß** die Traverse (90) die Form eines zylindrischen Elements aufweist und jedes der äußeren Riemenführungselemente (182) die Form einer relativ dicken Scheibe aufweist, die auf der Traverse (90) aufgenommen ist.

43. Rundballenpresse nach einem oder mehreren der vorherigen Ansprüche, **dadurch gekennzeichnet, daß** eine sich in Längsrichtung erstreckende Füllplatte (130) an jeder Seitenwand (22) befestigt ist und in Eingriff mit einer oberen Fläche des benachbarten Ballenbildungsriemens (42) ist und jede Füllplatte (130) oberhalb eines jeweiligen äußeren Riemenführungselements (42) in einem Abstand angeordnet ist, der kleiner ist als eine Stärke der Ballenbildungsriemen (42), wobei die benachbarten Ballenbildungsriemen (42) daran gehindert werden, sich seitwärts über die äußeren Riemenführungselemente (182) zu bewegen.

44. Rundballenpresse nach einem oder mehreren der vorherigen Ansprüche, **dadurch gekennzeichnet, daß** die inneren Riemenführungselemente an dem Schaber (172), insbesondere an dessen zweiten Schenkel (178) befestigt sind.
